Europäisches Patentamt

European Patent Office

Office européen des brevets

(19)

(11)  **EP 0 910 911 B1**

(12)  **FASCICULE DE BREVET EUROPEEN**

(45) Date de publication et mention
de la délivrance du brevet:
**11.05.2005  Bulletin 2005/19**

(21) Numéro de dépôt: **97933717.7**

(22) Date de dépôt: **11.07.1997**

(51) Int Cl.⁷: **H04L 12/56**

(86) Numéro de dépôt international:
**PCT/FR1997/001285**

(87) Numéro de publication internationale:
**WO 1998/002996 (22.01.1998 Gazette 1998/03)**

(54) **PROCEDE ET DISPOSITIF DE MESURE DE LA PROPORTION D'UN FLOT DE CELLULES ATM SATISFAISANT A UN CRITERE DETERMINE**

VERFAHREN UND ANLAGE ZUR MESSUNG DER PROPORTION EINES EINEM BESTIMMTEN KRITERIUM GENÜGENDEN ANTEILS EINES ATM-ZELLENFLUSSES

METHOD AND DEVICE FOR MEASURING THE PROPORTION OF AN ATM CELL STREAM SATISFYING A DETERMINED CRITERION

(84) Etats contractants désignés:
**CH DE ES FI FR GB IT LI SE**

(30) Priorité: **12.07.1996  FR 9608736**

(43) Date de publication de la demande:
**28.04.1999  Bulletin 1999/17**

(73) Titulaire: **Thales**
**75008 Paris (FR)**

(72) Inventeur: **BAVANT, Marc, Thomson-CSF S.C.P.I.**
**F-94117 Arceuil Cedex (FR)**

(56) Documents cités:
**EP-A- 0 666 668          WO-A-94/11972**

• **PROCEEDINGS OF THE INTERNATIONAL CONFERENCE ON FUZZY SYSTEMS, SAN DIEGO, MAR. 8 - 12, 1992, no. CONF. 1, 8 mars 1992, INSTITUTE OF ELECTRICAL AND ELECTRONICS ENGINEERS, pages 281-288, XP000342890 KHEDKAR P S ET AL: "FUZZY PREDICTION OF TIMESERIES"**

**Description**

La présente invention concerne un procédé et un dispositif de mesure applicable aux réseaux de transmission de données par paquets, et notamment à ceux connus sous l'abréviation anglo-saxonne ATM "*asynchronous transfer mode*".

Les paquets transportés dans les réseaux ATM sont dénommés cellules et il peut être intéressant de connaître en un point d'un flot de cellules quelle est, à chaque instant, la proportion de cellules qui satisfont à un critère déterminé : par exemple, quelle est la proportion de cellules correspondant à une connexion donnée, à un service donné, etc.

Si on connaît le débit total du flot de cellules, comme c'est par exemple le cas s'il s'agit du flot des cellules ATM empruntant une artère de débit connu, une mesure de proportion permet de déduire une mesure de débit pour les cellules satisfaisant au critère considéré.

Par essence même une telle mesure doit donner un résultat à tout instant mais elle doit tenir compte des événements qui se sont passés dans un passé plus ou moins récent. Une simple moyenne glissante telle que décrite dans la demande de brevet WO-A-94/11972, peut suffire dans de nombreux cas mais la mise en oeuvre d'un tel algorithme fait en général appel à une file circulaire des dernières valeurs, ce qui requiert des capacités de mémorisation et d'accès indexé à la mémoire. Par ailleurs l'horizon de cette moyenne, c'est-à-dire sa capacité de mémorisation du passé dépend directement de la mémoire physique disponible.

Le but de l'invention est de pallier les inconvénients précités grâce à un procédé et un dispositif qui permettent d'effectuer une mesure de proportion requérant des ressources matérielles minimales.

A cet effet, l'invention a pour objet un procédé de mesure de proportion de cellules ATM satisfaisant à un critère en un point déterminé d'un réseau de transmission de données par cellules, caractérisé en ce qu'il consiste à attribuer une première valeur numérique aux cellules passant par le point déterminé qui vérifient le critère et une deuxième valeur aux cellules qui ne satisfont pas le critère et à effectuer une moyenne exponentielle de la suite des valeurs un ainsi attribuées à chaque cellule.

L'invention a également pour objet, un dispositif pour la mise en oeuvre du procédé précité.

D'autres caractéristiques et avantages de l'invention apparaîtront dans la description qui suit faite en regard des dessins annexés qui représentent :

- Les figures 1 et 2 des dispositifs pour la mise en oeuvre du procédé selon l'invention.
- Les figures 3a à 3c des exemples de résultats obtenus par application du procédé selon l'invention.

Dans sa mise en oeuvre le procédé selon l'invention utilise le procédé de calcul connu de la moyenne exponentielle et qui n'est rien d'autre que le résultat d'un filtrage linéaire du premier ordre à temps discret effectué sur une suite de valeurs d'entrée $u_n$. La suite $x_n$ des états du filtre correspondant est défini par l'équation :

$$x_{n+1} = a.x_n + (1-a).u_n \qquad (1)$$

où a est un paramètre inférieur à 1, proche de 1, qui définit l'horizon du filtre. La suite $x_n$ représente ainsi une sorte de moyenne instantanée à plus ou moins long terme des entrées $u_n$. Le procédé selon l'invention consiste à attribuer à $u_n$ une première valeur lorsqu'une cellule passant en un point de mesure déterminé d'un réseau ATM à un instant n satisfait un critère déterminé et en lui fixant une deuxième valeur lorsque la cellule considérée ne satisfait pas ce critère, puis à effectuer un filtrage des valeurs $u_n$ selon l'équation (1) afin d'obtenir à tout instant une valeur moyenne $x_n$ représentant la proportion du nombre de cellules qui satisfont au critère et qui transitent au point de mesure sur le réseau.

A titre d'exemple, en fixant la première valeur de $u_n$ à 256 et la deuxième valeur de $u_n$ à zéro et en choisissant pour valeur de a une valeur remarquable, telle que 15/16 afin de limiter les opérations de multiplication et de division à des décalages binaires, la valeur de $x_n$ donne alors la proportion recherchée sur une échelle de 0 à 241.

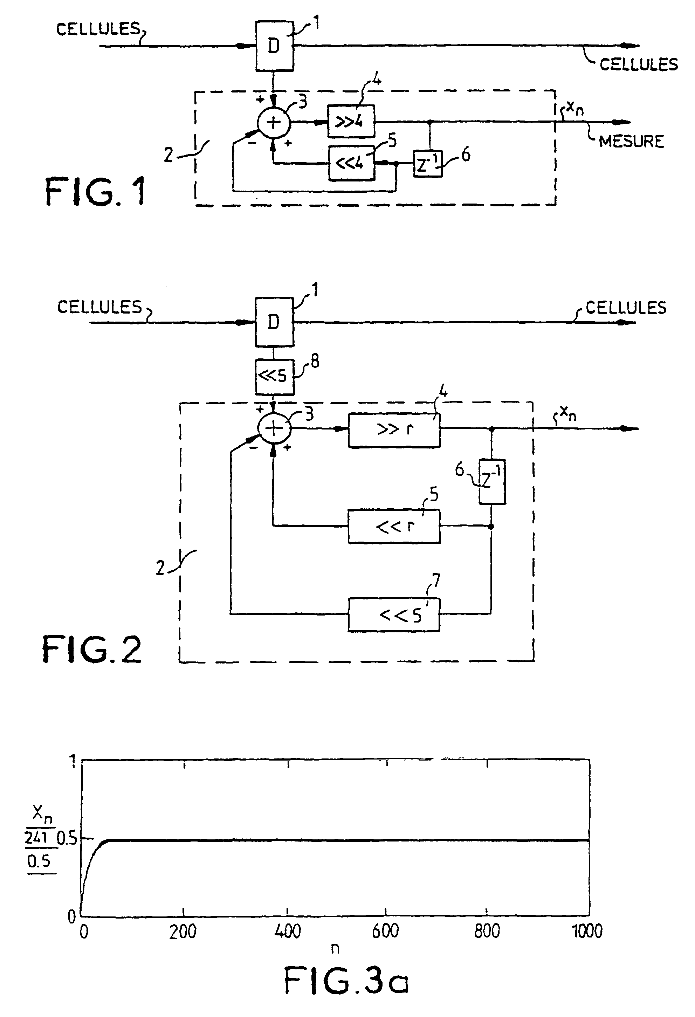

Un dispositif correspondant pour la mise en oeuvre du procédé selon l'invention est représenté à- la figure 1. Celui-ci comprend, un circuit de détection 1 de cellules correspondant au critère considéré couplé à un circuit de calcul de moyenne exponentielle 2 représenté à l'intérieur d'une ligne fermée en pointillé. Le circuit de détection 1 fourni la valeur $u_n$ correspondant au critère considéré à l'entrée du circuit de calcul 2 et qui est lu par exemple dans un champ prédéfini de la cellule ATM. Le circuit de calcul 2 comprend, un opérateur d'addition 3 couplé sur une première entrée d'opérande marquée "+" à une première sortie du circuit de détection 1. Il comprend également un premier opérateur de décalage 4 qui est couplé à la sortie de l'opérateur d'addition 3 pour fournir la suite des valeurs $x_n$. La sortie du premier opérateur de décalage 4 est couplée à une deuxième entrée d'opérande marquée "+" de l'opérateur d'addition 3 par l'intermédiaire d'un deuxième opérateur de décalage 5 et d'un circuit 6 de retard d'un bit reliés en série. Une troisième entrée d'opérande marquée "-" de l'opérateur d'addition 3 est couplée à la sortie du circuit de retard 6. Pour correspondre à l'exemple cité où a = 15/16 et $u_n$ est fixé à 256 ou zéro, le premier opérateur à décalage 4 est réglé pour effectuer un décalage de 4 bits vers la droite, le deuxième opérateur 5 est réglé pour effectuer un décalage de 4 bits vers la gauche.

Naturellement, le même résultat peut être obtenu à l'aide d'un microprocesseur microprogrammé. Dans ce cas la relation (1) devient :

$$x_{n+1}=((x_n<<4)-x_n+u_n)>>4 \qquad (2)$$

où les opérateurs « et » sont les opérateurs de décalage logique comme en langage C.

Des résultats comparables peuvent aussi être obtenus avec d'autres valeurs remarquables de a, telles que $(2^r-2^s)/2^r$. Il suffit pour cela de modifier le dispositif de la façon représentée à la figure 2 où les éléments homologues à ceux de la figure 1 sont représentés avec les mêmes références. Dans ce cas le premier opérateur 4 est réglé pour effectuer un décalage de r bits vers la droite et le deuxième opérateur 5 est réglé pour effectuer un décalage de r bits vers la gauche. Le dispositif diffère de celui de la figure 1 par l'adjonction d'un troisième opérateur à décalage 7 qui doit être inséré entre le dispositif à retard 6 et l'opérateur d'addition 3 et d'un quatrième opérateur à décalage 8 entre la sortie du détecteur 1 et la première entrée d'opérande de l'opérateur d'addition 3, tous deux pour effectuer un décalage de s bits vers la gauche. Dans le cas où a est égal à $(2^r-2^s)/2^r$ et pour $u_n = 2^q$ ou 0 selon que la cellule considérée vérifie ou non le critère en question, la proportion calculée par l'équation suivante est comprise entre 0 et $2^q-2^{r-s}+1$ soit :

$$x_{n+1}=(x_n<<r-x_n<<s+u_n<<s)>>r \qquad (3).$$

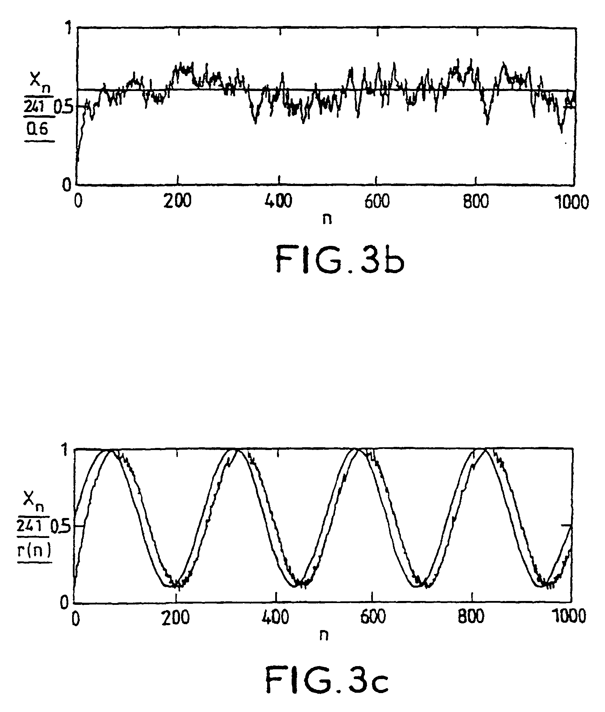

Des exemples de résultats obtenus par la mise en oeuvre du procédé selon l'invention sont montrés aux figures 3a, 3b et 3c.

La courbe représentée figure 3a montre la proportion mesurée lorsqu'une cellule sur deux satisfait au critère donné.

La courbe représentée figure 3b montre la proportion mesurée lorsque chaque cellule satisfait au critère donné avec une probabilité de 60%. (Simulation du hasard par une variable aléatoire uniforme.)

La courbe représentée figure 3c montre la proportion mesurée lorsque le débit de cellules satisfaisant au critère donné est ajusté à la sinusoïde en traits fins. (Si la cellule à l'instant n satisfait au critère, la prochaine cellule satisfaisant au critère arrivera à l'instant p, partie entière de n + 1/r(n) .)

**Revendications**

1. Procédé de mesure de proportion de cellules ATM satisfaisant à un critère en un point déterminé d'un réseau de transmission de données par cellules, **caractérisé en ce qu'**il consiste à attribuer (1) une première valeur numérique aux cellules passant par le point déterminé qui vérifient le critère et une deuxième valeur aux cellules qui ne satisfont pas le critère et à effectuer une moyenne exponentielle (2) de la suite des valeurs $u_n$ ainsi attribuées à chaque cellule.

2. Procédé selon la revendication 1, **caractérisé en ce que** la moyenne exponentielle (2) de la suite des valeurs $u_n$ est effectuée à l'aide d'un filtre numérique du premier ordre défini par l'équation :

$$x_{n+1}=a\,x_n + (1-a)u_n$$

où a est un paramètre inférieur à 1 mais proche de 1 et $x_n$ représente la suite des états du filtre.

3. Procédé selon la revendication 2, **caractérisé en ce qu'**il consiste à attribuer à la première valeur de $u_n$ la valeur 256 et à la deuxième valeur de $u_n$ la valeur 0.

4. Procédé selon les revendications 2 et 3, **caractérisé en ce qu'**il consiste à attribuer au paramètre "a" la valeur 15/16.

5. Procédé selon la revendication 2, **caractérisé en ce qu'**il consiste à attribuer au paramètre "a" une valeur définie par la relation $(2^r - 2^s)/2^r$ et à la première valeur de $u_n$ la valeur $2^q$ et à la deuxième valeur de $u_n$ la valeur 0, dans laquelle q, r et s sont des entiers positifs.

6. Dispositif de mesure de proportion de cellules ATM satisfaisant à un critère en un point déterminé d'un réseau de transmission de données par cellules, **caractérisé en ce qu'**il comprend un circuit de détection (1) de cellules satisfaisant ou non à ce critère et attribuant en fonction de ladite détection une valeur $u_n$ à chaque cellule couplé à un circuit de calcul de moyenne exponentielle (2) de la suite des valeurs $u_n$ composé d'un filtre numérique du premier ordre défini par l'équation $x_{n+1}=ax_n+(1-a)u_n$ où a est un paramètre inférieur à 1 mais proche de 1 et $x_n$ représente la suite des états du filtre.

7. Dispositif selon la revendication 6, **caractérisé en ce que** le circuit de calcul de moyenne exponentielle (2) comprend

   - un opérateur d'addition (3) recevant sur une première entrée d'opérande la suite des valeurs $u_n$
   - un premier opérateur de décalage (4) qui est couplé en sortie de l'opérateur d'addition (3) pour fournir la suite des valeurs $x_n$
   - un deuxième opérateur de décalage (5) couplé en série avec un circuit (6) de retard d'un bit entre la sortie du premier opérateur de décalage (4) fournissant la suite des valeurs $x_n$ et une deuxième entrée de l'opérateur d'addition (3),

- un troisième opérateur de décalage (7) couplée entre la sortie du circuit (6) de retard d'un bit et une troisième entrée d'opérande de l'opérateur d'addition (3) et un quatrième opérateur de décalage (8) pour appliquer la suite des valeurs $u_n$ sur la première entrée d'opérande de l'opérateur d'addition (3).

8. Dispositif selon la revendication 7, **caractérisé en ce que** le premier opérateur de décalage (4) effectue un décalage de r bits vers la droite, le deuxième opérateur de décalage (5) effectue un décalage de r bits vers la gauche, le troisième opérateur de décalage (7) et le quatrième opérateur de décalage (8) effectuent un décalage de s bits vers la gauche.

9. Dispositif selon les revendications 7 et 8, **caractérisé en ce qu'**il comprend des opérateurs de décalage ayant respectivement des longueurs de décalage de r = 4 et s = 0 bits.

**Patentansprüche**

1. Verfahren zur Messung des an einem bestimmten Punkt eines Netzes zur zellenweisen Datenübertragung einem Kriterium entsprechenden Anteils von ATM-Zellen, **dadurch gekennzeichnet, dass** es darin besteht, (1) den durch den bestimmten Punkt verlaufenden und das Kriterium erfüllenden Zellen einen ersten digitalen Wert zuzuordnen, und den das Kriterium nicht erfüllenden Zellen einen zweiten digitalen Wert zuzuordnen, und (2) einen exponentialen Mittelwert der Folge von so jeder Zelle zugeordneten Werten $u_n$ zu erzeugen.

2. Verfahren nach Anspruch 1, **dadurch gekennzeichnet, dass** der exponentiale Mittelwert (2) der Folge von Werten $u_n$ mit Hilfe eines digitalen Filters erster Ordnung erzeugt wird, das durch die folgende Gleichung definiert wird:

$$x_{n+1} = ax_n + (1-a)u_n$$

wobei a ein Parameter kleiner 1, aber nahe 1 ist, und $x_n$ die Folge der Zustände der Filter darstellt.

3. Verfahren nach Anspruch 2, **dadurch gekennzeichnet, dass** es darin besteht, dem ersten Wert von $u_n$ einen Wert 256 und dem zweiten Wert von $u_n$ den Wert 0 zu geben.

4. Verfahren nach den Ansprüchen 2 und 3, **dadurch gekennzeichnet, dass** es darin besteht, dem Parameter "a" den Wert 15/16 zu geben.

5. Verfahren nach Anspruch 2, **dadurch gekenn-**

zeichnet, dass es darin besteht, dem Parameter "a" einen durch die Beziehung $(2^r - 2^s)/2^r$ definierten Wert und dem ersten Wert von $u_n$ den Wert $2^q$ sowie dem zweiten Wert von $u_n$ den Wert 0 zu geben, wobei q, r und s positive ganze Zahlen sind.

6. Vorrichtung zur Messung des an einem bestimmten Punkt eines Netzes zur zellenweisen Datenübertragung einem Kriterium entsprechenden Anteils von ATM-Zellen, **dadurch gekennzeichnet, dass** sie eine Schaltung (1) zur Erfassung von Zellen enthält, die dieses Kriterium erfüllen oder nicht erfüllen, und in Abhängigkeit von dieser Erfassung jeder Zelle einen Wert $u_n$ zuteilt, wobei die Schaltung mit einer Schaltung zur Berechnung des exponentialen Mittelwerts (2) der Folge von Werten $u_n$ gekoppelt ist, die aus einem digitalen Filter erster Ordnung besteht, das durch die Gleichung $x_{n+1} = ax_n + (1-a)u_n$ definiert ist, wobei a ein Parameter kleiner 1, aber nahe 1 ist, und $x_n$ die Folge der Zustände des Filters darstellt.

7. Vorrichtung nach Anspruch 6, **dadurch gekennzeichnet, dass** die Schaltung zur Berechnung des exponentialen Mittelwerts (2) aufweist

- einen Additionsoperator (3), der an einem ersten Operandeneingang die Folge von Werten $u_n$ empfängt,
- einen ersten Verschiebeoperator (4), der an den Ausgang des Additionsoperators (3) gekoppelt ist, um die Folge von Werten $x_n$ zu liefern,
- einen zweiten Verschiebeoperator (5), der in Reihe mit einer Verzögerungsschaltung (6) um ein Bit zwischen dem Ausgang des ersten Verschiebeoperators (4), der die Folge der Werte $x_n$ liefert, und einem zweiten Eingang des Additionsoperators (3) eingefügt ist,
- einen dritten Verschiebeoperator (7), der zwischen dem Ausgang der Verzögerungsschaltung (6) um ein Bit und einem dritten Operandeneingang des Additionsoperators (3) eingefügt ist, und einen vierten Verschiebeoperator (8), um die Folge von Werten $u_n$ an den ersten Operandeneingang des Additionsoperators (3) anzulegen.

8. Vorrichtung nach Anspruch 7, **dadurch gekennzeichnet, dass** der erste Verschiebeoperator (4) eine Verschiebung um r Bits nach rechts, der zweite Verschiebeoperator (5) eine Verschiebung um r Bits nach links, der dritte Verschiebeoperator (7) und der vierte Verschiebeoperator (8) eine Verschiebung um s Bits nach links durchführt.

9. Vorrichtung nach den Ansprüchen 7 und 8, **dadurch gekennzeichnet, dass** sie Verschiebeoperatoren aufweist, die Verschiebelängen von r = 4 bzw. s = 0 Bits haben.

**Claims**

1. Process for measuring the proportion of ATM cells satisfying a criterion at a specified point of a cell-based data transmission network, **characterized in that** it consists in allocating (1) a first numerical value to the cells passing through the specified point which fulfil the criterion and a second value to the cells which do not satisfy the criterion and in performing an exponential mean (2) of the sequence of values $u_n$ thus allocated to each cell.

2. Process according to Claim 1, **characterized in that** the exponential mean (2) of the sequence of values $u_n$ is performed with the aid of a first-order digital filter defined by the equation:

$$x_{n+1} = a\,x_n + (1-a)u_n$$

where a is a parameter less than 1 but close to 1 and $x_n$ represents the sequence of states of the filter.

3. Process according to Claim 2, **characterized in that** it consists in allocating the value 256 to the first value of $u_n$ and the value 0 to the second value of $u_n$.

4. Process according to Claims 2 and 3, **characterized in that** it consists in allocating the value 15/16 to the parameter "a".

5. Process according to Claim 2, **characterized in that** it consists in allocating a value defined by the relation $(2^r-2^s)/2^r$ to the parameter "a" and the value $2^q$ to the first value of $u_n$ and the value 0 to the second value of $u_n$, in which q, r and s are positive integers.

6. Device for measuring the proportion of ATM cells satisfying a criterion at a specified point of a cell-based data transmission network, **characterized in that** it comprises a circuit (1) for detecting cells satisfying this criterion or not and allocating a value $u_n$ to each cell as a function of the said detection, coupled with an exponential mean calculating circuit (2) of the sequence of values $u_n$, composed of a first-order digital filter defined by the equation $x_{n+1} = ax_n + (1-a)u_n$ where a is a parameter less than 1 but close to 1 and $x_n$ represents the sequence of states of the filter.

7. Device according to Claim 6, **characterized in that** the exponential mean calculating circuit (2) comprises

- an addition operator (3) receiving the sequence of values $u_n$ on a first operand input
- a first shift operator (4) which is coupled to the output of the addition operator (3) so as to supply the sequence of values $x_n$
- a second shift operator (5) coupled in series with a delay-by-one-bit circuit (6) between the output of the first shift operator (4) supplying the sequence of values $x_n$ and a second input of the addition operator (3),
- a third shift operator (7) coupled between the output of the delay-by-one-bit circuit (6) and a third operand input of the addition operator (3) and a fourth shift operator (8) so as to apply the sequence of values $u_n$ to the first operand input of the addition operator (3).

8. Device according to Claim 7, **characterized in that** the first shift operator (4) performs a rightward shift by r bits, the second shift operator (5) performs a leftward shift by r bits, the third shift operator (7) and the fourth shift operator (8) perform a leftward shift by s bits.

9. Device according to Claims 7 and 8, **characterized in that** it comprises shift operators having shift lengths of r=4 and s=0 bits respectively.

FIG.1

FIG.2

FIG.3a

FIG.3b

FIG.3c